# EUROPÄISCHE PATENTANMELDUNG

(11) **EP 1 927 494 A1**
(43) Veröffentlichungstag der Anmeldung: **04.06.2008**
(21) Anmeldenummer: 06024912.5
(22) Anmeldetag: 01.12.2006
(51) Int. Cl.: B60J 7/22

(54) **Windabweiser für ein Schiebedachsystem**

(71) Anmelder: ArvinMeritor GmbH, 63128 Dietzenbach (DE)
(72) Erfinder: Spikermann, Martin, 65201 Wiesbaden (DE); Heyn, Detlef, 35274 Kirchhain (DE)
(74) Vertreter: Sties, Jochen

(57) **Zusammenfassung**

Ein Schiebedachsystem mit mindestens einer Führungsschiene (12), einem Deckel (16), der relativ zu der Führungsschiene verstellbar ist, einem Windabweiser (20), der zwischen einer abgesenkten und einer ausgestellten Position verstellbar ist, und mindestens zwei Betätigungselementen (28), die am Windabweiser (20) angreifen können, um diesen aus der ausgestellten Position in die abgesenkte Position zu drücken, ist gekennzeichnet durch einen Versatz V, der dazu führt, daß das System einen Zustand einnehmen kann, in welchem eines der Betätigungselemente (28) am Windabweiser (20) angreift, während das andere Betätigungselement (28) noch vom Windabweiser (20) beabstandet ist.

## Beschreibung

Die Erfindung betrifft ein Schiebedachsystem mit mindestens einer Führungsschiene, einem Deckel, der relativ zu der Führungsschiene verstellbar ist, einem Windabweiser, der zwischen einer abgesenkten und einer ausgestellten Position verstellbar ist, und mindestens zwei Betätigungselementen, die am Windabweiser angreifen können, um diesen aus der ausgestellten Position in die abgesenkte Position zu drücken.

Der Windabweiser wird üblicherweise von einer Ausstellfeder in die ausgestellte Position beaufschlagt. Diese nimmt der Windabweiser ein, wenn er nicht von den Betätigungselementen in der abgesenkten Stellung behalten wird. Dabei muß die Ausstellfeder so stark dimensioniert sein, daß der Windabweiser auch bei hoher Fahrgeschwindigkeit von den wirkenden Windlasten nicht nach unten gedrückt werden kann, sondern stabil in seiner ausgestellten Position verbleibt. Die Betätigungselemente sind üblicherweise entweder am Deckel des Schiebedachsystems oder an der Verstellmechanik für den Deckel angebracht. Dadurch werden sie, wenn der Deckel aus einer geöffneten Stellung hin zu seiner geschlossenen Stellung verstellt wird, hin zum Windabweiser bewegt. Die Betätigungselemente sind so angeordnet, daß sie bei der Schließbewegung des Deckels automatisch den Windabweiser entgegen der Federkraft der Ausstellfeder aus der ausgestellten in die abgesenkte Position herunterdrücken, so daß der Windabweiser aus dem Verstellweg des Deckels herausgeschwenkt wird und der Deckel schließen kann. Es ist also kein separater Antrieb zum Verstellen des Windabweisers notwendig, sondern die Verstellbewegung des Windabweisers resultiert aus der Verstellung des Deckels und wird somit letztendlich vom Antrieb für den Deckel bewirkt.

Bei modernen Schiebedachsystemen ist eine Einklemmschutzfunktion vorgesehen, die verhindert, daß beim Schließen des Deckels unzulässig hohe Kräfte auf Dinge ausgeübt werden, die sich im Verfahrweg des Deckels befinden, beispielsweise die Hand eines Fahrzeuginsassen. Zur Realisierung der Einklemmschutzfunktion ist in vielen Fällen vorgesehen, die Stromaufnahme des Antriebsmotors für den Deckel oder die Motordrehzahl des Antriebsmotors zu überwachen. Falls die Stromaufnahme einen bestimmten Grenzwert überschreitet oder die Motordrehzahl unter einen bestimmten Grenzwert oder mit einer übermäßig hohen Rate absinkt, wird dies so interpretiert, daß sich ein Hindernis im Verstellweg des Deckels befinden muß. Daraufhin wird der Antriebsmotor abgeschaltet und in einigen Fällen in der entgegengesetzten Richtung, also der Öffnungsrichtung des Deckels, betrieben, um den eventuell bereits eingeklemmten Gegenstand wieder freizugeben.

Da die Anforderungen an einen zuverlässigen Einklemmschutz immer höher werden, werden immer niedrigere Grenzwerte für beispielsweise Stromaufnahme des Antriebsmotors oder Verringerung der Motordrehzahl festgesetzt, deren Überschreiten zum Ansprechen der Einklemmschutzfunktion führt. Hieraus kann sich das Problem ergeben, daß das Auftreffen der Betätigungselemente auf den Windabweiser, um diesen gegen die Federkraft aus der ausgestellten in die abgesenkte Position zu verstellen, zu einem solchen Anstieg der Stromaufnahme des Antriebsmotors bzw. zu einer solchen Verringerung seiner Drehzahl führt, daß die Einklemmschutzfunktion anspricht und den Deckel stoppt oder ihn sogar wieder geringfügig in Richtung einer weiter geöffneten Stellung verstellt. Dies ist offensichtlich unerwünscht.

Die Aufgabe der Erfindung besteht darin, ein Schiebedachsystem der eingangs genannten Art dahingehend weiterzubilden, daß ein fehlerhaftes Ansprechen der Einklemmschutzfunktion, wenn der Windabweiser aus seiner ausgestellten in die abgesenkte Position verstellt wird, zuverlässig verhindert wird.

Zur Lösung dieser Aufgabe ist erfindungsgemäß bei einem Schiebedach der eingangs genannten Art ein Versatz vorgesehen, der dazu führt, daß das System einen Zustand einnehmen kann, in welchem eines der Betätigungselemente am Windabweiser angreift, während das andere Betätigungselement noch vom Windabweiser beabstandet ist. Die Erfindung beruht allgemein ausgedrückt auf dem Grundgedanken, den Vorgang des Verstellens des Windabweisers aus der ausgestellten in die abgesenkte Position in zwei Abschnitte zu zerlegen, die nicht, wie im Stand der Technik, gleichzeitig ausgeführt werden, sondern nacheinander. Dies führt dazu, daß die Betätigungselemente und damit der Antriebsmotor den Gesamtwiderstand, der zum Überführen des Windabweisers in die abgesenkte Position erforderlich ist, nicht plötzlich erfahren, sondern der Widerstand in zwei kleinere Teilbeträge aufgespaltet wird, die nacheinander wirken. Dies führt dazu, daß der Anstieg der Stromaufnahme geringer ist und auch die Motordrehzahl um einen geringeren Betrag absinkt, so daß die Einklemmschutzfunktion nicht fälschlicherweise anspricht.

Gemäß einer bevorzugten Ausführungsform der Erfindung ist vorgesehen, daß der Windabweiser zwei Anlenkarme aufweist, wobei die beiden Arme unterschiedlich ausgeführt sind, so daß sich der Versatz ergibt. Diese Ausführungsform hat den Vorteil, daß die Verstellmechanik des Schiebedachsystems nicht modifiziert werden muß, um die Erfindung zu benutzen. Statt dessen ist es ausreichend, den separat hergestellten Windabweiser geeignet zu modifizieren. Dies ermöglicht, die erfindungsgemäße Lösung in eine laufende Produktserie einfließen zu lassen.

Es gibt verschiedene Möglichkeiten, die beiden Anlenkarme des Windabweisers so unterschiedlich auszuführen, daß sich der Versatz ergibt. Beispielsweise kann jeder Anlenkarm an einer Führungsschiene angelenkt sein, wobei die beiden Anlenkpunkte, betrachtet in der Längsrichtung der Führungsschienen, gegeneinander versetzt sind. Alternativ könnte auch einer der Anlenkarme in dem Bereich, der mit dem ihm zugeordneten Betätigungselement zusammenwirkt, steiler ausgeführt sein als der andere, so daß sich der Versatz beim Auftreffen der Betätigungselemente auf die Anlenkarme ergibt.

Gemäß einer alternativen Ausführungsform ist vorgesehen, daß die Betätigungselemente am Deckel angebracht und gegeneinander versetzt sind. Die Betätigungselemente können bei dieser Ausführungsform kleine Vorsprünge an der Unterseite des Deckels im Bereich ihres vorderen Randes sein, so daß sich der zum zeitversetzten Betätigen des Windabweisers notwendige Versatz mit geringem Aufwand herbeiführen läßt.

Gemäß einer wiederum weiteren Ausführungsform der Erfindung ist vorgesehen, daß die Betätigungselemente verschiebbar an den Führungsschienen angebracht und gegeneinander versetzt sind. Bei dieser Ausführungsform sind die Betätigungselemente nach Art von separaten, an den Führungsschienen verstellbaren Niederhaltern ausgeführt, die sich so voneinander unterscheiden, daß der gewünschte Versatz beim Betätigen der beiden Anlenkarme des Windabweisers erhalten wird.

Gemäß einem weiteren Aspekt der Erfindung ist zur Lösung der oben genannten Aufgabe ein Verfahren zum Verstellen eines Windabweisers eines Schiebedachsystems aus einer ausgestellten Position in eine abgesenkte Position vorgesehen, bei dem zwei Betätigungselemente so verstellt werden, daß sie am Windabweiser angreifen und diesen aus der ausgestellten in die abgesenkte Position drücken, wobei zunächst eines der Betätigungselemente am Windabweiser angreift und diesen in Richtung der abgesenkten Position zu drücken beginnt und erst anschließend auch das zweite Betätigungselement am Windabweiser angreift, um diesen in die abgesenkte Position zu drücken. Hinsichtlich der sich mit diesem Verfahren ergebenden Vorteile wird auf die obigen Erläuterungen in bezug auf das erfindungsgemäße Schiebedachsystem verwiesen.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 in einer schematischen Seitenansicht ein Schiebedachsystem gemäß einer ersten Ausführungsform der Erfindung;
- Figur 2 den Deckel des Schiebedachsystems von Figur 1 in einer Unteransicht;
- Figur 3 in einer vergrößerten, abgebrochenen Ansicht den vorderen Rand des Deckels des Schiebedachsystems von Figur 1;
- Figur 4 in einer perspektivischen Ansicht ein Schiebedachsystem gemäß einer zweiten Ausführungsform, wobei zur besseren Übersichtlichkeit der Deckel nicht dargestellt ist;
- Figur 5 in einer perspektivischen Ansicht den Mechanismus des Schiebedachsystems von Figur 4;
- Figur 6 in einer schematischen Ansicht einen Windabweiser für ein Schiebedachsystem gemäß einer dritten Ausführungsform der Erfindung;
- Figur 7 in einer Seitenansicht eine Variante des Windabweisers von Figur 6; und
- Figur 8 ein Diagramm der Motordrehzahl des Antriebsmotors eines erfindungsgemäßen und eines herkömmlichen Schiebedachsystems in Abhängigkeit vom Verstellweg des Deckels.

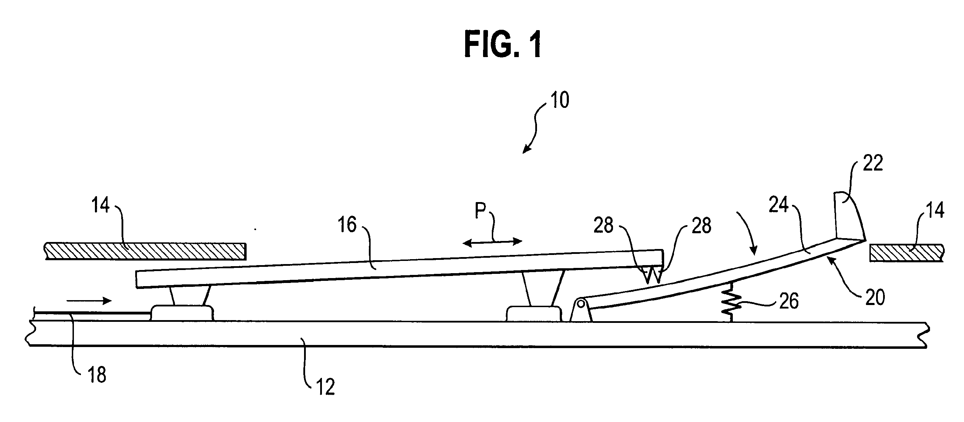

In den Figuren 1 bis 3 ist ein Schiebedachsystem 10 gezeigt, welches dafür vorgesehen ist, am Dach eines Kraftfahrzeugs angebracht zu werden. Das Schiebedachsystem weist zwei Führungsschienen 12 auf, die entlang den Rändern einer Öffnung im Fahrzeugdach angebracht sind. Vom Fahrzeugdach sind hier zwei Karosserieabschnitte 14 zu sehen, die in Fahrtrichtung gesehen vor und hinter der Dachöffnung liegen. An der Führungsschiene ist verstellbar ein Deckel 16 angebracht, der von einem Antriebskabel 18 und einem (nicht dargestellten) Antriebsmotor verstellt werden kann. Im Bereich des vorderen Randes der Dachöffnung ist ein Windabweiser 20 angeordnet, der hier aus einem Querteil 22 und zwei Anlenkarmen 24 gebildet ist. Die beiden Anlenkarme 24 zusammen mit dem Querteil 22 haben eine allgemein U-förmige Gestalt. Es ist eine Ausstellfeder 26 vorgesehen, die den Windabweiser 20 in die in Figur 1 gezeigte, ausgestellte Position beaufschlagt. In dieser Position erstreckt sich das Querteil 22 oberhalb der Dachhaut, also oberhalb des vorderen Karosserieabschnitts 14.

Das gezeigte Schiebedachsystem könnte grundsätzlich auch mehr als einen Deckel aufweisen. Wichtig für die Erfindung ist nur, daß es einen (vorderen) Deckel gibt, der den Windabweiser nach unten drücken kann.

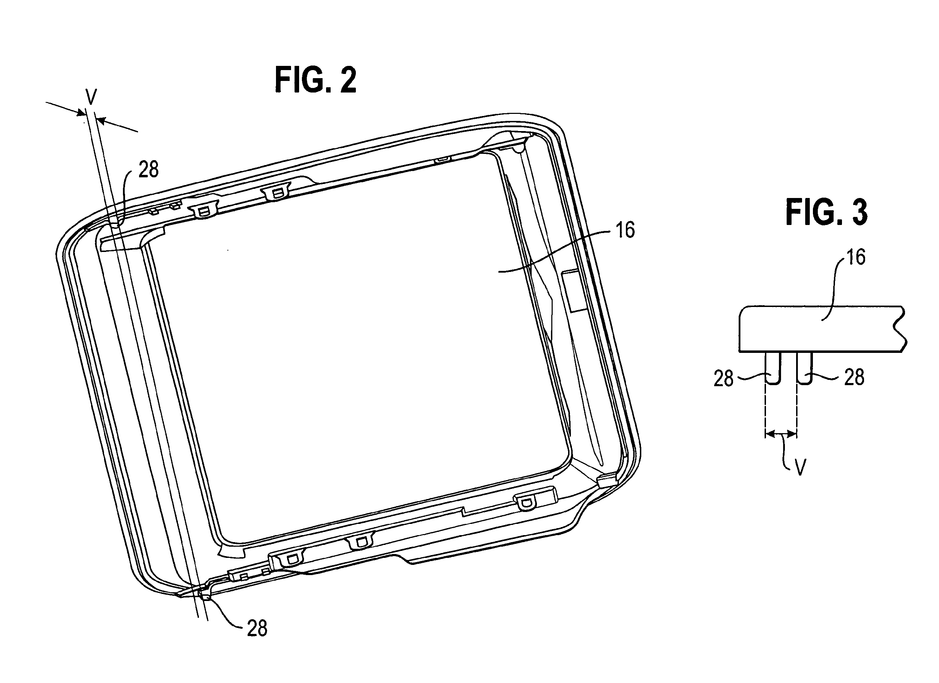

An der Unterseite des Deckels 16 sind im Bereich des in Fahrtrichtung des Fahrzeugs gesehen vorderen Randes, also auf der dem Windabweiser 20 zugewandten Seite, zwei Betätigungselemente 28 angeordnet (siehe auch Figur 2). Diese sind nach der Art von Nasen aus Kunststoff ausgeführt und erstrecken sich um etwa denselben Betrag vom Deckel 16 weg nach unten. Wesentlich ist, daß die beiden Betätigungselemente 28, betrachtet in der Längsrichtung des Fahrzeugs und insbesondere entlang der Verstellrichtung P des Deckels 16, mit einem Versatz V gegeneinander angeordnet sind. Anders ausgedrückt befindet sich eines der Betätigungselemente 28 weiter vorne als das andere.

Die Anordnung der beiden Betätigungselemente 28 mit einem Versatz V relativ zueinander bewirkt, daß beim Schließen des Deckels 16, also wenn dieser ausgehend von der in Figur 1 gezeigten Stellung nach rechts hin zu einer geschlossenen Stellung bewegt wird, die beiden Betätigungselemente 28 nicht gleichzeitig auf die beiden Anlenkarme 24 auftreffen, sondern nacheinander. Dies bewirkt, daß der Verstellbewegung des Deckels 16 zunächst nur von einem Anlenkarm 24 ein Widerstand entgegengesetzt wird. Erst nachdem der Deckel 16 um einen Weg weiter hin zur geschlossenen Stellung verstellt wurde, der in etwa dem Versatz V entspricht, greift auch das zweite Betätigungselement 28 am entsprechenden Anlenkarm 24 des Windabweisers 20 an. Dies bewirkt, daß der Deckel 16 in seiner Bewegung hin zur geschlossenen Stellung nicht abrupt dadurch abgebremst wird, daß die beiden Betätigungselemente 28 gleichzeitig auf die beiden Anlenkarme 24 des Windabweisers 20 auftreffen, sondern sanft.

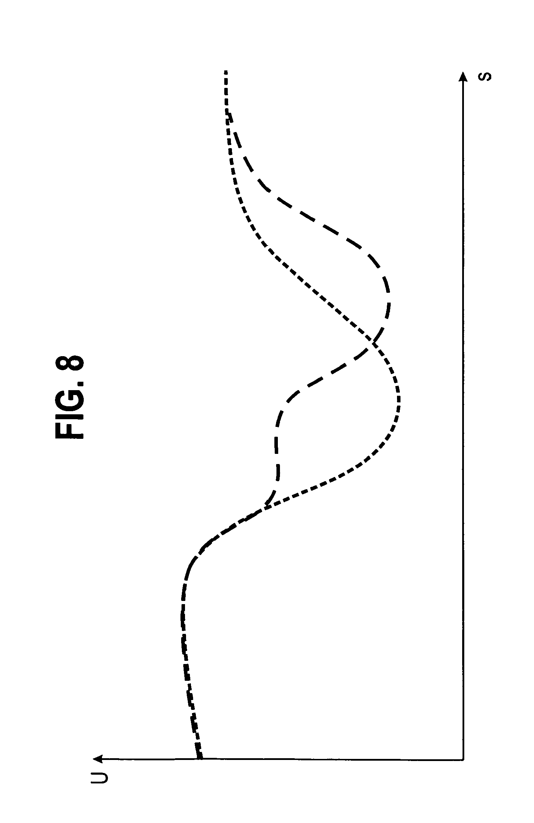

In Figur 8 ist der Verlauf der Motordrehzahl U des Antriebsmotors über dem Verschiebeweg des Deckels 16 aufgetragen. Die gepunktete Linie A zeigt den Verlauf für ein Schiebedachsystem nach dem Stand der Technik, bei dem die beiden Betätigungselemente 28 gleichzeitig auf die Anlenkarme 24 des Windabweisers 20 auftreffen. Es ist deutlich zu sehen, daß die Motorgeschwindigkeit stark abfällt. Dadurch besteht die Gefahr, daß die Einklemmschutzfunktion des Schiebedachsystems fälschlicherweise anspricht.

Mit der gestrichelten Linie B ist der Verlauf der Motordrehzahl bei dem erfindungsgemäßen Schiebedachsystem dargestellt. Es ist zu sehen, daß die Motordrehzahl, wenn das erste Betätigungselement 28 auf den ihm zugeordneten Windabweiserarm trifft, um einen ersten Betrag absinkt und erst danach, wenn auch das zweite Betätigungselement 28 den ihm zugeordneten Anlenkarm 24 erreicht hat, ein weiteres Mal absinkt. Dabei ist zum einen der Abfall der Motordrehzahl insgesamt sehr viel weniger steil als bei einem Schiebedachsystem nach dem Stand der Technik. Außerdem fällt die Motordrehzahl absolut gesehen weniger ab als bei einem System nach dem Stand der Technik. Somit ist die Gefahr verringert, daß die sich aus dem Zusammenwirken des Deckels mit dem Windabweiser ergebende Verringerung der Motordrehzahl fälschlicherweise vom Einklemmschutzsystem als Gefahrensituation erkannt wird.

Nachdem die beiden Betätigungselemente 28 mit den ihnen zugeordneten Anlenkarmen 24 zusammenwirken, wird der Windabweiser in an sich bekannter Weise weiter nach unten bis in die vollständig abgesenkte Position gedrückt, wenn der Deckel 16 weiterhin zu seiner geschlossenen Stellung verfahren wird.

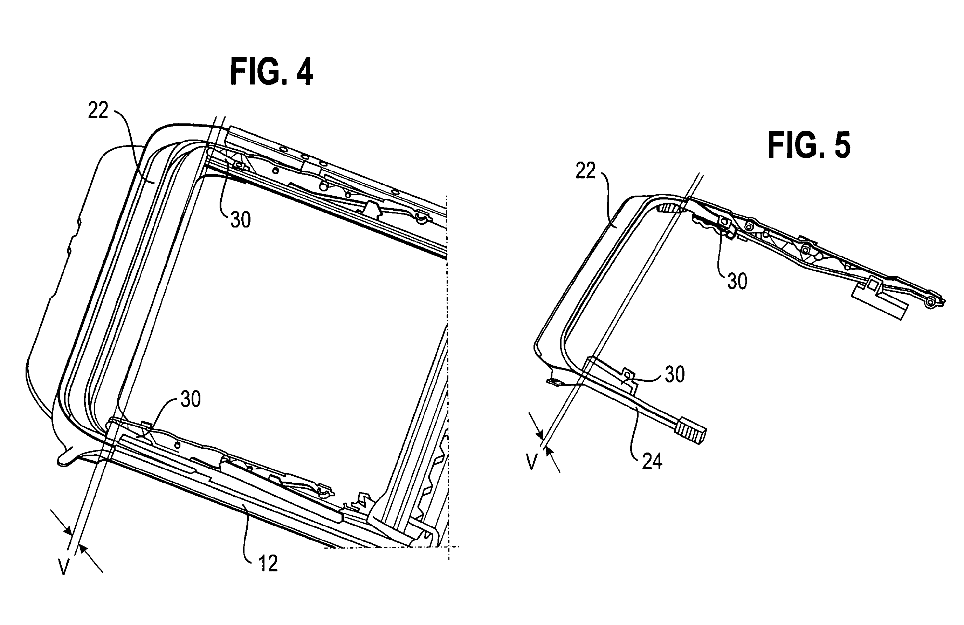

In den Figuren 4 und 5 ist ein Schiebedachsystem gemäß einer zweiten Ausführungsform gezeigt. Für die von der ersten Ausführungsform bekannten Bauteile werden dieselben Bezugszeichen verwendet, und es wird insoweit auf die obigen Erläuterungen verwiesen.

Der Unterschied zwischen der ersten und der zweiten Ausführungsform besteht im wesentlichen darin, daß bei der zweiten Ausführungsform die Betätigungselemente 28 nicht an dem Deckel 16 angeordnet sind, sondern jeweils an einem Schlitten 30, der Teil der Mechanik des Schiebedachsystems ist. Die Wirkungsweise der Betätigungselemente 28 ist aber an sich dieselbe wie bei der ersten Ausführungsform. Wenn die Mechanik des Schiebedachsystems und damit der Deckel hin zur geschlossenen Stellung bewegt werden, werden sie so weit nach vorne verschoben, daß sie auf die Anlenkarme 24 des Windabweisers 20 auflaufen und diesen aus der ausgestellten Position nach unten in die abgesenkte Position drücken. Auch bei der zweiten Ausführungsform ist ein Versatz V zwischen den beiden Betätigungselementen 28 vorgesehen. Die Betätigungselemente 28 sind dabei als seitliche Vorsprünge an den Schlitten 30 ausgeführt.

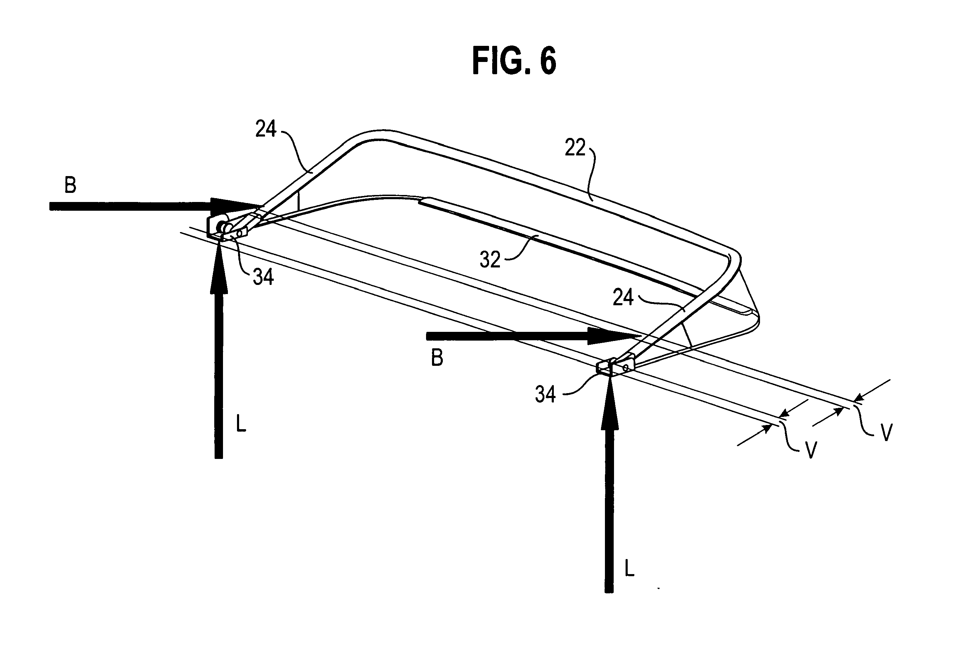

In Figur 6 ist schematisch ein Windabweiser für eine dritte Ausführungsform eines Schiebedachsystems gezeigt. Für die von den ersten Ausführungsformen bekannten Bauteile werden dieselben Bezugszeichen verwendet, und es wird insoweit auf die obigen Erläuterungen verwiesen.

Ein Unterschied zwischen der dritten Ausführungsform und den vorhergehenden Ausführungsformen besteht darin, daß es sich beim Windabweiser der dritten Ausführungsform um einen sogenannten Netzwindabweiser handelt. Bei diesem ist am Querteil 22 und den beiden Anlenkarmen 24 ein Netz aus einem Kunststoffmaterial angebracht, welches sich nach unten hin zu einem Verankerungsteil 32 erstreckt. Dieses ist unterhalb des Fahrzeugdaches im Bereich der Führungsschienen 12 verankert.

Der wesentliche Unterschied zwischen der dritten Ausführungsform und den beiden vorhergehenden Ausführungsformen besteht darin, daß die beiden Anlenkarme 24 an unterschiedlichen Positionen an den Führungsschienen 12 angelenkt sind. Zu sehen sind in Figur 6 zwei Lagerblöcke 34, die im Bereich der Führungsschienen 12 angebracht sind. Einer der Lagerblöcke 34 ist, in Fahrtrichtung und Längsrichtung der Führungsschienen betrachtet, weiter hinten angeordnet als der andere, so daß sich ein Versatz V zwischen ihren mit dem Pfeil L angedeuteten Positionen und damit auch eine Versatz zwischen den Schwenkachsen der Anlenkarme 24 ergibt. Dies führt dazu, daß der Anlenkarm 24, der weiter hinten angelenkt ist als der andere, länger ausgeführt ist und sich auch mit einer geringfügig geringeren Neigung erstreckt. Beim Schließen des Deckels treffen nun die beiden Betätigungselemente 28, die am Deckel oder auch an einem Schlitten angebracht sein können, zu unterschiedlichen Zeiten auf die beiden Anlenkarme 24. Das Betätigungselement, welches dem weiter hinten angelenkten Anlenkarm 24 zugeordnet ist (in Figur 6 der rechte Anlenkarm), wirkt mit diesem früher zusammen als das andere Betätigungselement. In Figur 6 sind diese unterschiedlichen Positionen, die wiederum zu einem Versatz V führen, mit den Pfeilen B bezeichnet.

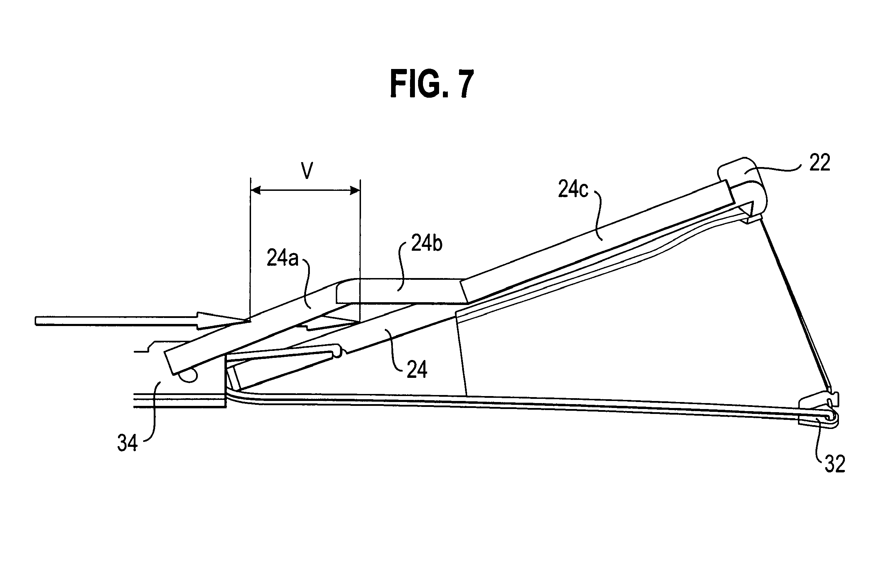

In Figur 7 ist ein Windabweiser für ein Schiebedachsystem gemäß einer vierten Ausführungsform gezeigt. Der Windabweiser entspricht im wesentlichen dem von Figur 6 bekannten Windabweiser. Auch bei dieser Ausführungsform sind die beiden Anlenkarme 24 gegeneinander versetzt mittels der Lagerblöcke 34 angelenkt.

Der Unterschied zur dritten Ausführungsform besteht darin, daß einer der Anlenkarme 24, hier der bezogen auf die Zeichenebene weiter vorne liegende Anlenkarm, nicht gerade ausgeführt ist, sondern abgekröpft. Er besteht aus einem ersten Abschnitt 24a, der am Lagerblock 34 angelenkt ist und sich parallel zum hinteren Anlenkarm 24 erstreckt, einem Zwischenabschnitt 24b, der sich in der ausgestellten Position des Windabweisers etwa waagrecht erstreckt, und einem zweiten Abschnitt 24c. Dieser erstreckt sich ausgehend vom Zwischenabschnitt 24b hin zum Querteil 22. Der erste und der zweite Abschnitt 24a, 24b erstrecken sich dabei parallel zueinander.

Aufgrund des Versatzes V zwischen den Bereichen der beiden Anlenkarme 24, die mit den Betätigungselementen 28 zusammenwirken, also dem unteren, am Lagerblock 34 angelenkten Abschnitt des hinteren Anlenkarmes 24 und dem ersten Abschnitt 24a des vorderen Anlenkarms, treffen die beiden Betätigungselemente 28 gegeneinander versetzt auf die Anlenkarme auf. Dies bewirkt, daß zunächst der abgekröpft ausgeführte Anlenkarm nach unten gedrückt wird und erst später der in Fahrtrichtung gesehen weiter vorne angelenkte Anlenkarm.

Allen Ausführungsformen gemeinsam ist, daß die Anlenkarme 24 des Windabweisers 20 beim Schließen des Deckels und damit beim Verfahren des Windabweisers aus der ausgestellten Position in die abgesenkte Position geringfügig schräg verstellt wird. Dies ist notwendigerweise die Folge davon, daß einer der Anlenkarme 24 früher nach unten gedrückt wird als der andere. Diese geringfügige Schrägstellung des Querteils 22 ist jedoch aufgrund der Eigenelastizität des Windabweisers nicht kritisch. Außerdem ist sie so gering, daß sie von einem Fahrzeuginsassen üblicherweise nicht bemerkt wird. Grundsätzlich sollte der Versatz und die daraus resultierende Schrägstellung des Querteils jedoch so gering wie möglich gehalten werden, um Torsionsbelastungen des Querteils 22 zu begrenzen. Auch dürfte eine übermäßige Schrägstellung des Querteils, wenn sie von einem Fahrzeuginsassen bemerkt wird, eher negativ auffallen. Der Versatz muß jedoch in jedem Fall so hoch sein, daß er größer ist als die sich im Betrieb maximal einstellende Positionstoleranz der zusammenwirkenden Bauteile, damit der konstruktiv vorgesehene Versatz und die daraus resultierende Verzögerung beim Herunterdrücken der beiden Anlenkarme nicht zufällig durch die auftretenden Toleranzen zunichte gemacht wird.

### Bezugszeichenliste:

- 10:: Schiebedachsystem
- 12:: Führungsschiene
- 14:: Karosserieabschnitt
- 16:: Deckel
- 18:: Antriebskabel
- 20:: Windabweiser
- 22:: Querteil
- 24:: Anlenkarm
- 24a:: erster Abschnitt des Anlenkarms
- 24b:: Zwischenabschnitt des Anlenkarms
- 24c:: zweiter Abschnitt des Anlenkarms
- 26:: Ausstellfeder
- 28:: Betätigungselement
- 30:: Schlitten
- 32:: Verankerungsteil
- 34:: Lagerblock

## Patentansprüche

1. Schiebedachsystem mit mindestens einer Führungsschiene (12), einem Deckel (16), der relativ zu der Führungsschiene verstellbar ist, einem Windabweiser (20), der zwischen einer abgesenkten und einer ausgestellten Position verstellbar ist, und mindestens zwei Betätigungselementen (28), die am Windabweiser (20) angreifen können, um diesen aus der ausgestellten Position in die abgesenkte Position zu drücken, **gekennzeichnet durch** einen Versatz V, der dazu führt, daß das System einen Zustand einnehmen kann, in welchem eines der Betätigungselemente (28) am Windabweiser (20) angreift, während das andere Betätigungselement (28) noch vom Windabweiser (20) beabstandet ist.

2. Schiebedachsystem nach Anspruch 1, **dadurch gekennzeichnet, daß** der Windabweiser (20) zwei Anlenkarme (24) aufweist, wobei die beiden Arme unterschiedlich ausgeführt sind, so daß sich der Versatz V ergibt.

3. Schiebedachsystem nach Anspruch 2, **dadurch gekennzeichnet, daß** jeder Anlenkarm (24) an einer Führungsschiene angelenkt ist und daß die beiden Anlenkpunkte (34), betrachtet in der Längsrichtung der Führungsschienen (12), gegeneinander versetzt sind.

4. Schiebedachsystem nach Anspruch 2 oder Anspruch 3, **dadurch gekennzeichnet, daß** einer der Anlenkarme (24) in dem Bereich, der mit dem ihm zugeordneten Betätigungselement (28) zusammenwirkt, steiler ausgeführt ist als der andere, so daß sich der Versatz beim Auftreffen der Betätigungselemente auf die Anlenkarme ergibt.

5. Schiebedachsystem nach einem der vorhergehenden Ansprüche, **dadurch gekennzeichnet, daß** die Betätigungselemente (28) am Deckel (16) angebracht und gegeneinander versetzt sind.

6. Schiebedachsystem nach einem der vorhergehenden Ansprüche, **dadurch gekennzeichnet, daß** die Betätigungselemente (28) verschiebbar an den Führungsschienen (12) angebracht und gegeneinander versetzt sind.

7. Schiebedachsystem nach einem der vorhergehenden Ansprüche, **dadurch gekennzeichnet, daß** eine Feder (26) vorgesehen ist, die den Windabweiser (20) in die ausgestellte Position beaufschlagt.

8. Verfahren zum Verstellen eines Windabweisers (20) eines Schiebedachsystems (10) aus einer ausgestellten Position in eine abgesenkte Position, bei dem zwei Betätigungselemente (28) so verstellt werden, daß sie am Windabweiser (20) angreifen und diesen aus der ausgestellten in die abgesenkte Position drücken, **dadurch gekennzeichnet, daß** zunächst eines der Betätigungselemente (28) am Windabweiser (20) angreift und diesen in Richtung der abgesenkten Position zu drücken beginnt und erst anschließend auch das zweite Betätigungselement (28) am Windabweiser (20) angreift, um diesen in die abgesenkte Position zu drücken.
